Europäisches Patentamt

European Patent Office

Office européen des brevets

(19)

(11) Publication number: 0 146 172
B1

(12)

EUROPEAN PATENT SPECIFICATION

(45) Date of publication of patent specification: 29.06.88

(21) Application number: 84201750.1

(22) Date of filing: 29.11.84

(51) Int. Cl.⁴: C 08 J 3/00, C 08 J 3/28, C 08 J 3/24

(54) Process for the preparation of impact-resistant thermoplastic polymer mixtures and impact-resistant polymer compositions.

(30) Priority: 03.12.83 NL 8304162
03.12.83 NL 8304161

(43) Date of publication of application:
26.06.85 Bulletin 85/26

(45) Publication of the grant of the patent:
29.06.88 Bulletin 88/26

(84) Designated Contracting States:
AT BE CH DE FR GB IT LI NL SE

(56) References cited:
FR-A-2 329 705
GB-A-2 098 533

KIRK-OTHMER, Encyclopedia of Chemical
Technology, third edition/volume 19/John
Wiley & Sons

(73) Proprietor: STAMICARBON B.V.
Mijnweg 1
NL-6167 AC Geleen (NL)

(72) Inventor: Schrijver, Jan
Steenakker 40
NL-6116 CN Roosteren (NL)
Inventor: Hoen, Nicolaas Gerard Marie
Hugo de Grootstraat 1
NL-6181 BG Stein (NL)
Inventor: Lemstra, Pieter Jan
Walcundusstrasse 3
NL-6444 TX Brunssum (NL)
Inventor: Van Gunst, Christiaan Anne
Kapellerweg 35
NL-6132 AV Sittard (NL)

(74) Representative: Hoogstraten, Willem Cornelis
Roeland et al
OCTROOIBUREAU DSM Postbus 9
NL-6160 MA Geleen (NL)

**Description**

Background of the invention

The invention relates to a process for the preparation of impact-resistant thermoplastic polymer mixtures on the basis of a thermoplastic polymer and a rubber. The invention also relates to a process for the preparation of impact-resistant polymer compositions starting from such impact-resistant thermoplastic polymer mixtures.

It is known to prepare impact-resistant thermoplastic polymer mixtures by preparing a matrix of a thermoplastic polymer, such as polystyrene, with rubber particles, for instance a copolymer of styrene butadiene, dispersed in it (see, for instance, Rubber Chem. Technology *43* (1970), page 1129 ff.). The mixture thus obtained is usually converted into granules, in particular granulate, using known methods such as batch kneading and/or extrusion, and is sold to the process industry in that form.

It has been found that further processing of such a granulate, for instance by injection moulding or sheet extrusion, is attended by some undesirable phenomena, such as changes in shape and size of the dispersed particles and delamination of the object obtained from such a granulate.

It has already been proposed to reduce these detrimental phenomena in the processing of such polymer mixture granules, so as to impart greater stability to the product, by adding an agent promoting adhesion of the rubber in the thermoplastic matrix during preparation of the mixture (see, for instance, Journal Macromol, Science-Physics Ed., volume B 17 (2), 1980, pages 355—374).

The addition of an agent promoting the adhesion between a vinyl aromatic polymer and a diene rubber with a view to obtaining a composition having good impact resistance is already described in French patent application 2329705.

Although a mixture obtained by such a process is more stable in processing, it has been found that delamination may still occur to a rather substantial degree when such a mixture is processed.

The present invention provides a process which permits the preparation of impact-resistant thermoplastic polymer mixtures based upon a thermoplastic polymer and a rubber, which mixtures exhibit very little or no delamination in the end product upon further processing.

European patent specification 44234 describes a process for the preparation of a graft copolymer of styrene and an ethylenepropylene terpolymer, which graft copolymer is subjected to irradiation after being prepared. In this process styrene and rubber are dissolved in ethyl benzene, after which bulk polymerization takes place. The disadvantage of this method is that it is laborious and economically less attractive.

Summary of the invention

The present invention relates to a process for the preparation of impact-resistant thermoplastic polymer mixtures having improved properties after processing, comprising the steps of (a) preparing, in a mixing zone, a mixture having a matrix phase of a thermoplastic polymer that is resistant to irradiation and a phase of rubber particles dispersed therein, in the presence of a compound which promotes adhesion of the particles in the matrix, (b) solidifying the mixture from the mixing zone, and (c) subjecting the mixture from the mixing zone to irradiation, either before or after solidification.

A thermoplastic polymer that is resistant to irradiation is here understood to mean a thermoplastic polymer the good properties of which are retained to a sufficient degree upon the irradiation necessary for cross-linking of the rubber particles.

This process has been found to yield a mixture in which the optimum size and shape of the particles, as present in the matrix, are essentially fixed, and thus are retained throughout further processing.

The explanation of this phenomenon is that the dispersed rubber phase becomes wholly or partly cross-linked as a result of the irradiation and remains anchored in the matrix, while the matrix itself is hardly cross-linked at all under the influence of the irradiation, and, therefore, remains thermoplastic.

Detailed description of the invention

The mixtures of a thermoplastic polymer and a rubber to be applied in this process can be obtained in ways known *per se* and in mixing zones known *per se*, for instance using continuous methods such as single- or double-screw extrusion, or using discontinuous methods such as batch kneading or rolling.

The ratio of the components in the mixture may vary widely.

A mixture is used that contains 50 to 95 parts by weight, preferably 75 to 90 parts by weight thermoplastic polymer, and 50 to 5 parts by weight, preferably 25 to 10 parts by weight rubber particles.

As thermoplastic component in this embodiment, in principle use can be made of every thermoplastic polymer that is resistant to irradiation.

The thermoplastic polymers that can be applied include polystyrene, copolymer of styrene with, for instance, acrylonitrile or with maleic anhydride, polyamides such as nylon 6, nylon 6.6, nylon 4.6, nylon 12 and copolymers thereof, polyesters such as polyethylene terephthalate or polybutylene terephthalate, polypropylene or polycarbonates. (Co)polymers of styrene are preferred.

The rubbers that can be applied include polybutadiene, a butadiene-acrylonitrile or butadiene-styrene copolymer, an acrylate or butyl rubber, an ethylene-propylene or ethylene-vinylacetate copolymer, a chlorinated polyethylene, an ethylene-propylene copolymer in which other polyunsaturated monomers such as dicyclopentadiene or ethylidene norbornene are copolymerized, or mixtures of two or more of these rubbers. It is also possible to apply a mixture of such a rubber with other rubbery polymers, such as polyisobutene. It has been found that the impact resistance of the mixture increases if the particle size of the rubber particles dispersed in the thermoplastic matrix decreases. It has further been found that a mixture with optimum impact resistance is obtained if the number average particle size (determined by scanning electron microscopy) of the rubber particles dispersed in the matrix is at most 1.0 µm, preferably in the range of between about 0.1 and 1.0 µm, and most preferably between about 0.2—0.5 µm.

Such a mixture can be obtained if, during the preparation a compound is added that reduces the rubber particle size and, at the same time, promotes the adhesion of the particles in the matrix. It has been found that, to serve this purpose, the compound should consist of polymer units, which is soluble in the matrix phase and soluble in the rubber phase. Examples of such compounds are di- and tri-blocks, such as ethylene-styrene or isobutene-styrene copolymers, graft polymers of styrene and an ethylene-propylene polyunsaturated monomer, or hydrogenated butadiene-styrene or styrene-butadiene-styrene block copolymers. If polystyrene or a copolymer of styrene is applied as thermoplastic component, a very suitable agent is a product marketed under the name of Kraton® G-1652 (RTM) by Shell, which is prepared by anionic block polymerization of styrene and butadiene to an unsaturated styrene-butadiene-styrene block copolymer, which is subsequently hydrogenated, yielding a (styrene-ethylene/butene-styrene) block copolymer with less than 1 wt.% unsaturation (see Polymer Eng. and Science, 23 (June 1983) No. 9, pages 510—514).

If a polyamide is applied as thermoplastic, the suitable agents including block copolymers of isobutene and one or more lactams, and graft copolymers on the basis of carboxylated EPDM with a nylon, while a block copolymer of propylene and ethylene is suitable for thermoplastics containing polypropylene.

The amount of such an adhesion promoting agent in the mixture may vary, for instance from between 0.1 to 10 wt.%, calculated relative to the polymer mixture. If an agent is utilized that can be mixed with the rubber, and that itself is at least partially crosslinkable under the influence of irradiation, a larger amount of the agent can, in principle, be used, and be amount of rubber can be reduced proportionally. If a suitable agent is chosen, it even is possible to use such agent to replace the total amount of rubber.

The polymer mixture thus obtained is either processed as such into polymer products or first solidified in manners known per se, for instance by converting into a granulate, ribbon, strand, or strip suitable for transport, storage, and further processing. By preference, the mixture is converted into a granulate.

According to the invention, the mixture obtained from the mixing zone, or the granulate, ribbon, strand, or strip prepared from it, is irradiated. This can be effected by passing the product below an irradiation source or passing the mixture or product between the irradiation sources. As irradiation source, preferably an electron beam donor can be applied, but in principle a gamma radiation source, such as Cobalt 60, also can be applied. A list of customary irradiation sources and methods is presented in Rubber Chemistry and Technology 55 (1982), pages 575—668.

The irradiation intensity applied to this process may vary, depending on the diameter or thickness of the diameter or thickness of the product to be irradiated, the intensity generally being increased for products having a larger diameter or thickness. The irradiation dose level is preferably chosen to be in the range of between about 0.1 and 20 Mrad, and most preferably between about 0.5 and 5 Mrad. The irradiation may be carried out at reduced, elevated, or atmospheric pressure, optionally in an inert atmopshere which is practically free of oxygen, and the product or mixture may be at room temperature, or at a reduced or elevated temperature. When an elevated temperature (for instance >50°C) is used, a lower irradiation dose suffices, and for this reason this embodiment is to be preferred.

There also may be some advantage in incorporating an agent which promotes the irradiation effectiveness in the mixture. Suitable agents are polyfunctional unsaturated compounds which dissolve at least in part in the rubber, such as triallyl cyanurate and -isocyanurate, trimethylolpropanetrimethacrylate, ethylene glycoldimethacrylate, triallyphosphite, or a low-molecular 1,2-polybutadiene. A list of suitable agents promoting the irradiation effectivity is presented in Plastics Technology, 10, (1964), page 28. The amount applied of such agents may vary, for instance between 0.1 and 10 wt.%, calculated relative to the rubber component.

The polymer mixtures thus obtained can be processed as such into polymer products, for instance through injection moulding, sheet extrusion, and the like. The products obtained are highly suitable for articles that must have, on the one hand, reasonable rigidity, and on the other hand, high light or weather resistance, such as parts of TV sets or office machines, garden furniture, or sports articles.

The polymer mixtures obtained can also be mixed with compatible polymers and subsequently be processed into polymer products.

The polymer mixtures are eminently suitable for the preparation of thermoplastic polymer compositions having a high impact resistance by mixing these products with thermoplastic copolymers that are miscible with them. They are particularly suitable for admixing in engineering plastics such as polyphenylene oxides, for instance in an amount of 10 to 90 parts by weight of polymer mixture with 90 to 10 parts by weight of polyphenylene oxides.

**0 146 172**

Brief description of the figures

Figures 1 and 2 are microscopic pictures of non-irradiated product from Comparative Test No. 1 of Example I below.

Figures 3 and 4 are microscopic pictures of irradiated product in accordance with the invention from Test No. 2 of Example I below.

Description of preferred embodiments of the invention

Preferred embodiments of the invention will be described in greater detail in the following examples, without being restricted thereto.

Example I

To a batch kneader of the David Bridge type, polystyrene, rubber, and an adhesion promoting compound were supplied in a weight ratio of 75:20:5. As the polystyrene, a granular product marketed by Dow under the name of Styron® 686 E (RTM) was applied. The rubber was an EPDM rubber marketed by DSM under the name of Keltan® 378 (RTM), and the adhesion promoting compound was a product marketed by Shell under the name of Kraton® G1652 (RTM). The starting temperature in the kneader was approximately 110—120°C, which increased to approximately 200°C during kneading (speed 160 rpm). The mixture leaving the kneader was granulated in an extruder (Schwabentahn type).

A portion of the granulate thus formed was irradiated in two steps with the aid of a 3 MeV electron gun, at a temperature of approximately 50°C and a total irradiation dose of 4 Mrad. The remaining portion of the granulate was not irradiated.

Both the irradiated and the non-irradiated granulate were further processed into bars suitable for an Izod determination in accordance with ASTM standard 256/56 in an injection moulding apparatus of the Teknika type of approximately 240°C.

Test No. 1 (Comparative test)

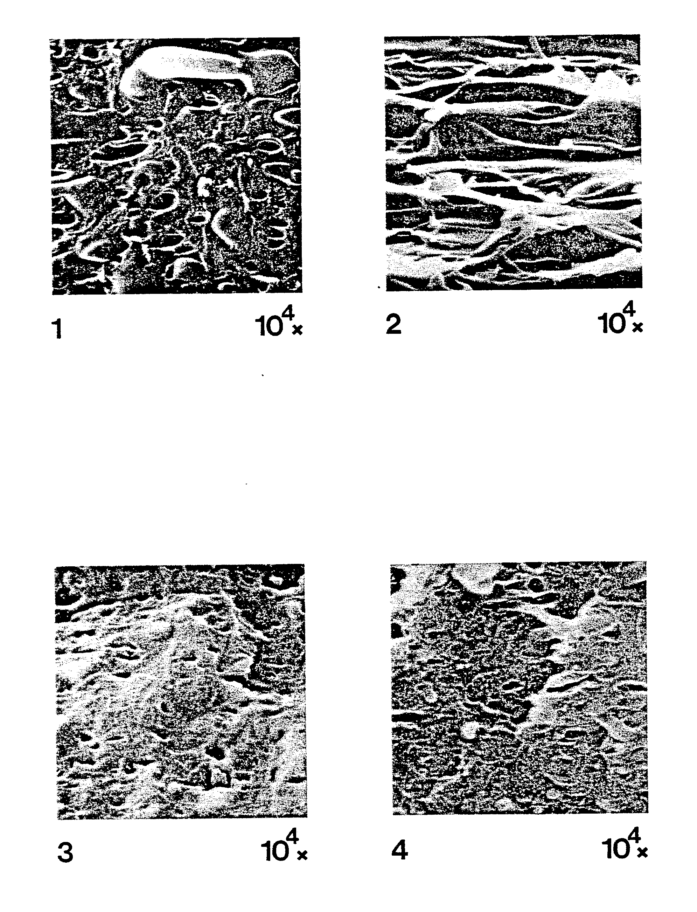

The Izod value of the non-irradiated product was $7.8\pm0.2$ kJ/m$^2$. After injection moulding the structure of the product clearly was inhomogeneous, which is illustrated by microscopic pictures of Figures 1 and 2. Especially at the edge, a laminar structure buildup was discernible (photograph of Figure 2). The product clearly showed delamination. On deflection, for instance, objectionable flaking occurred.

Test No. 2 (According to the invention)

The Izod value of the irradiated product was somewhat higher than that of the non-irradiated product, i.e., $8.3\pm0.3$ kJ/m$^2$. After injection moulding the product had a very homogeneous structure (photographs of Figures 3 and 4) and exhibited hardly any laminar structure at the edge (photograph of Figure 4). On deflection, for instance, no flaking or any other delamination phenomena whatsoever occurred.

Comparative Example A (Test Nos. 3 and 4)

In the way described in Example I, polystyrene of the type Styron® 686 E (RTM) was granulated, a portion of the granulate was irradiated and both the irradiation and the non-irradiated granulate were injection moulded. Neither the irradiated nor the non-irradiated product were found to be impact resistant; the Izod values were practically identical, i.e., $1.5\pm0.1$ kJ/m$^2$ and $1.3\pm0.1$ kJ/m$^2$, respectively.

Comparative Example B

In the same way as in Example I, polystyrene of the type Styron® 686 M (RTM) was mixed with various Keltan® rubber types and adhesion promoting compounds, and thereafter granulated and injection moulded at 200°C. Of the products obtained, the Izod value and the rubber particle size were determined. The results are presented in Table I.

TABLE I

| Test No. | Rubber (in wt.%) | Adhesion promoting compound (in wt.%) | Izod-value (kJ/m$^2$) | Rubber particle size (μm) |
|---|---|---|---|---|
| 5 | 10% Keltan® 578 | — | 2.6±0.1 | 1—2.5 |
| 6 | 25% Keltan® 578 | — | 4.5±0.1 | 1—7 |
| 7 | 16.5% Keltan® 578 | 3.5% Kraton® G 1650 | 6.3±0.1 | 1—5 |
| 8 | 20% Keltan® 578 | 5% Kraton® G 1650 | 8.2±0.2 | 0.5—2.5 |
| 9 | 20% Keltan® 378 | 5% Kraton® G 1652 | 23.3±0.3 | 0.5—1 |

4

Though the above table makes it clear that the impact resistance of the product increases when the rubber content and the adhesion promoting compound content are raised, the products obtained by injection moulding were found to exhibit serious delamination.

Example II (Tests Nos. 10 through 14)

The process of Comparative Example B was repeated, but now the granulate obtained was subjected to electron radiation at 50—55°C, the total irradiation dose being 4 Mrad. The Izod value of the products obtained was found to be slightly higher than that of Comparative Example B, while no delamination phenomena whatsoever occurred.

Example III

In the same way as in Example I, mixtures were prepared of 75 wt.% polystyrene (Styron® 686 E (RTM)), 20 wt.% rubber (Keltan® 378 (RTM), and 5 wt.% adhesion promoting compound (Kraton® G 1652 (RTM)), following which the mixture was granulated, irradiated, and injection moulded. The results are summarized in Table II.

TABLE II

| Test No. | Injection moulding temp. (°C) | Irradiation dose (Mrad) | Izod value $(kJ/m^2)$ | Notes |
|---|---|---|---|---|
| 15 | 240 | 0 | 8.3±0.4 | |
| 16 | 260 | 0 | 5.6±0.2 | Evident delamination |
| 17 | 280 | 0 | 4.6±0.2 | |
| 18 | 300 | 0 | 3.7±0.2 | |
| 19 | 240 | 5 | 8.2±0.2 | |
| 20 | 260 | 5 | 6.9±0.2 | |
| 21 | 280 | 5 | 5.1±0.2 | |
| 22 | 300 | 5 | 4.5±0.2 | No delamination |
| 23 | 240 | 7.5 | 8.3±0.3 | |
| 24 | 260 | 7.5 | 7.1±0.3 | |
| 25 | 280 | 7.5 | 6.1±0.2 | |
| 26 | 300 | 7.5 | 5.2±0.1 | |

The above results show that irradiation results not only in the delamination phenomena being eliminated but also in markedly higher Izod values of the products obtained at higher injection moulding temperatures.

Example IV

In the same way as in Example I, mixtures of polystyrene, rubber, and adhesion promoting compound were granulated, irradiated, and injection moulded. The products obtained did not exhibit any delamination. The results are summarized in Table III.

5

**0 146 172**

TABLE III

| Test No. | Polystyrene (Styron® 686 E) (in wt.%) | Rubber (Keltan®) (in wt.%) | Adhes. prom. compound (Kraton® G) (in wt.%) | Injection moulding temp. (in °C) | Irrad. dose (in Mrad) | Izod value (in kJ/m²) |
|---|---|---|---|---|---|---|
| 27 | 80 | 16.5 (K 578) | 3.5 (G 1652) | 200 | 3 | 9.8±0.2 |
| 28 | 80 | 16.5 (K 578) | 3.5 (G 1652) | 200 | 6 | 10.0±0.2 |
| 29 | 80 | 16.5 (K 312) | 3.5 (G 1650) | 200 | 5 | 6.2±0.1 |
| 30 | 80 | 16.5 (K 512) | 3.5 (G 1650) | 200 | 5 | 4.4±0.1 |
| 31 | 80 | 16.5 (K 712) | 3.5 (G 1650) | 200 | 5 | 4.5±0.1 |
| 32 | 80 | 16.5 (K 812) | 3.5 (G 1650) | 200 | 5 | 4.6±0.1 |
| 33 | 75 | 20 (K 312) | 5 (G 1652) | 220 | 3 | 12.2±0.2 |
| 34 | 75 | 20 (K 312) | 5 (G 1652) | 220 | 5 | 12.4±0.2 |
| 35 | 75 | 20 (K 312) | 5 (G 1652) | 220 | 7 | 12.8±0.2 |
| 36 | 75 | 20 (K 378) | 5 (G 1652) | 220 | 5 | 14.8±0.3 |
| 37 | 75 | 20 (K 378) | 5 (G 1652) | 220 | 6 | 15.0±0.3 |

Example V

In the same way as in Example I, a mixture of 80 wt.% polystyrene (type Styron® 686 E (RTM), 16.5 wt.% EPDM rubber (type Keltan® 578 (RTM)) and adhesion promoting compound was granulated and the granulate irradiated (dose 4 Mrad) and injection moulded at 200°C.

In Test No. 38, the adhesion promoting compound was made of a styrene-butadiene-styrene block copolymer marketed by Shell under the name of Cariflex® TR 1107 (RTM). In tests Nos. 39 and 40, the adhesion promoting compound was a Cariflex® TR 1107 product that had been hydrogenated to 80% and 90%, respectively.

The Izod values of the products obtained after injection moulding were 4.4 kJ/m² (test No. 38), 6.4 kJ/m² (test 39), and 7.1 kJ/m² (test 40). The products did not exhibit delamination.

Example VI

In the same way as in Example I, a mixture of 82.5 wt.% of a styrene-acrylonitrile copolymer, marketed under the name of Tyril® 110 (RTM) by Dow, 22.0 wt.% EPDM rubber (Keltan® 378 (RTM) of DSM), and 5.5 wt.% adhesion promoting compound (Kraton® G 1652 (RTM) of Shell) was granulated. A portion of the granulate was irradiated (irradiation dose 4 Mrad), upon which both the irradiated and the non-irradiated granulate were injection moulded at 220°C and 240°C.

The Izod values of the non-irradiated product were 2.7 kJ/m² (injection moulding temperature 220°C) and 2.5 kJ/m² (injection moulding temperature 240°C). The product clearly exhibited flaking on deflection.

The Izod values of the irradiated product were 2.8 kJ/m² (injection moulding temperature 220°C) and 2.7 kJ/m² (injection moulding temperature 240°C). The product did not flake on deflection.

**Claims**

1. Process for the preparation of impact-resistant thermoplastic polymer mixtures having improved properties after processing on the basis of a thermoplastic polymer and a rubber in the presence of a compound having the capability of promoting adhesion of the rubber on the thermoplastic polymer characterized in that in a mixing zone, a mixture is prepared having 50 to 95 parts by weight of a matrix phase of a thermoplastic polymer that is resistant to irradiation and 50 to 5 parts by weight of a phase of rubber particles dispersed therein in the presence of 0.5 to 10 parts by weight of a compound which promotes adhesion of the particles in the matrix, solidifying the mixture from the mixing zone and subjecting the mixture from the mixing zone to irradiation, either before or after solidification.

2. The process of claim 1 characterized in that the thermoplastic polymer that is resistant to irradiation is polystyrene or a copolymer of styrene with acrylonitrile or with maleic anhydride.

6

3. The process of claim 1 characterized in that said mixture obtained in said mixing zone is subjected to irradiation prior to said solidification.

4. The process of claim 1 characterized in that said mixture obtained in said mixing zone, prior to said irradiation, is converted into a granulate and the granulate so obtained is subjected to irradiation.

5. The process of claim 1 characterized in that said mixture contains from

50 to 95 parts by weight of a matrix phase essentially consisting of polystyrene or a copolymer of styrene with acrylonitrile or maleic anhydride;

50 to 5 parts by weight of a particulate rubber phase, having an average particle size of between about 0.1 and 1.0 μm, selected from the group consisting of polybutadiene, a butadiene-acrylonitrile copolymer, a butadiene-styrene copolymer, an acrylate rubber, a butyl rubber, an ethylene-vinylacetate copolymer, an ethylene-propylene copolymer, a chlorinated polyethylene, an ethylene-propylene copolymer in which other polyunsaturated monomers have been copolymerized, and mixtures thereof; and

0.5 to 10 parts by weight of an adhesion promoting compound consisting of polymer units, which is soluble in said matrix phase, and which is soluble in said rubber phase.

6. The process of claim 5 characterized in that said adhesion promoting compound is selected from the group consisting of an ethylene-styrene copolymer, an isobutene-styrene copolymer, a graft polymer of styrene and an ethylene-propylene polyunsaturated monomer, a hydrogenated butadiene-styrene block copolymer, and a hydrogenated styrene-butadiene-styrene block copolymer.

7. The process of claim 1 wherein said irradiation is effected by electron irradiation.

8. The process of claim 1 wherein said irradiation is applied at a dose level of between about 0.1 and 20 Mrad.

9. The process of claim 1 wherein a polyfunctional unsaturated compound that dissolves at least partly in said rubber phase and promotes irradiation effectiveness is incorporated in said mixture in an amount of between about 0.1 and 10 wt.%, calculated relative to said rubber phase.

10. An impact-resistant thermoplastic polymer mixture based upon a thermoplastic polymer and a rubber in the presence of a compound having the capability of promoting adhesion of the rubber on the thermoplastic polymer, characterized in that said polymer mixture is essentially comprising:

50 to 95 parts by weight of a matrix phase of a thermoplastic polymer that is resistant to irradiation;

50 to 5 parts by weight of a particulate, at least partially crosslinked rubber phase, having an average particle size of between about 0.1 and 1.0 μm, selected from the group consisting of polybutadiene, a butadiene-acrylonitrile copolymer, a butadiene-styrene copolymer, an acrylate rubber, a butyl rubber, an ethylene-vinylacetate copolymer, an ethylene-propylene copolymer, a chlorinated polyethylene, an ethylene-propylene copolymer in which other polyunsaturated monomers have been copolymerized, and mixtures thereof; and

0.5 to 10 parts by weight of an adhesion promoting compound consisting of polymer units, which is soluble in said matrix phase, and which is soluble in said rubber phase.

11. Polymer mixture according to claim 10, characterized in that said rubber phase particles are anchored in said matrix phase with the aid of said adhesion promotion compound.

12. The polymer mixture of claim 10 characterized in that the thermoplastic polymer that is resistant to irradiation is polystyrene or a copolymer of styrene with acrylonitrile or with maleic anhydride.

13. The process of claim 1 characterized in that the impact-resistant thermoplastic polymer mixture thus obtained is further admixed with a polyphenylene oxide and processed into an impact resistant polymer product.

14. An impact-resistant polymer composition characterized in that it is consisting of from between:

(a) 10 and 90 parts by weight of said impact resistant thermoplastic polymer mixture of claim 10; and

(b) 90 and 10 parts by weight of a polyphenylene oxide.

15. Shaped articles made, at least in part, from the impact-resistant thermoplastic polymer mixture of claim 10.

16. Shaped articles made, at least in part, from the impact-resistant thermoplastic polymer composition of claim 14.

## Patentansprüche

1. Verfahren zur Herstellung von schlagzähen thermoplastischen Polymergemischen mit verbesserten Eigenschaften nach der Verarbeitung auf der Basis eines thermoplastischen Polymers und eines Kautschuks in Gegenwart einer Verbindung, welche befähigt ist, als Promotor für die Haftung des Kautschuks am thermoplastischen Polymer zu wirken, dadurch gekennzeichnet, daß in einer Mischzone ein Gemisch mit 50 bis 95 Gew.-Teilen einer Matrixphase aus thermoplastischem, gegen Bestrahlung beständigem Polymer und 50 bsi 5 Gew.-Teilen einer darin dispergierten Phase aus Kautschukteilchen in Gegenwart von 0,5 bis 10 Gew.-Teilen einer Verbindung, welche die Haftung der Teilchen in der Matrix fördert, hergestellt, das Gemisch aus der Mischzone verfestigt, und das Gemisch aus der Mischzone entweder vor oder nach der Verfestigung einer Bestrahlung ausgesetzt wird.

2. Verfahren nach Anspruch 1, dadurch gekennzeichnet, daß das thermoplastische, gegen Bestrahlung beständige Polymer Polystyrol oder ein Copolymer von Styrol mit Acrylnitril oder mit Maleinsäureanhydrid ist.

# 0 146 172

3. Verfahren nach Anspruch 1, dadurch gekennzeichnet, daß das in der Mischzone erhaltene Gemisch vor der Verfestigung bestrahlt wird.

4. Verfahren nach Anspruch 1, dadurch gekennzeichnet, daß das in der Mischzone erhaltene Gemisch vor der Bestrahlung in ein Granulat übergeführt und das so erhaltene Granulat der Bestrahlung ausgesetzt wird.

5. Verfahren nach Anspruch 1, dadurch gekennzeichnet, daß das Gemisch

50 bis 95 Gew.-Teile einer Matrixphase bestehend im wesentlichen aus Polystyrol oder einem Copolymer von Styrol mit Acrylnitril oder Maleinsäureanhydrid;

50 bis 5 Gew.-Teile einer teilchenförmigen Kautschukphase mit einer durchschnittlichen Teilchengröße zwischen etwa 0,1 und 1,0 µm, ausgewählt aus der Gruppe umfassend Polubutadien, ein Butadien-Acrylnitrilcopolymer, ein Butadien-Styrolcopolymer, einen Acrylatkautschuk, einen Butylkautschuk, ein Ethylen-Vinylacetatcopolymer, ein Ethylen-Propylencopolymer, ein chloriertes Polyethylen, ein Ethylen-Propylencopolymer, in welches andere polyfunktionelle Gruppe eincopolymerisiert worden waren, und Gemisch hiervon; und

0,5 bis 10 Gew.-Teile einer aus Polymereinheiten bestehenden Haftpromotorverbindung, die in der Matrixphase und in der Kautschukphase löslich ist, enthält.

6. Verfahren nach Anspruch 5, dadurch gekennzeichnet, daß die Hapftpromotorverbindung aus der Gruppe umfassend ein Ethylen-Styrolcopolymer, ein Isobuten-Styrolcopolymer, ein Pfropfpolymer aus Styrol und einem polyungesättigten Ethylen-Propylenmonomer, ein hydriertes Butadien-Styrolblockcopolymer und ein hydriertes Styrol-Butadien-Styrolblockcopolymer, ausgewählt ist.

7. Verfahren nach Anspruch 1, dadurch gekennzeichnet, daß die Bestrahlung mittels Elektronenbestrahlung erfolgt.

8. Verfahren nach Anspruch 1, dadurch gekennzeichnet, daß die Bestrahlung bei Dosierungswerten zwischen etwa 0,1 und 20 Mrad durchgeführt wird.

9. Verfahren nach Anspruch 1, dadurch gekennzeichnet, daß eine zumindest teilweise in der Kautschukphase lösliche und die Wirksamkeit der Bestrahlung fördernde polyfunktionelle ungesättigte Verbindung in das Gemisch in einer Menge zwischen etwa 0,1 und 10 Gew.-%, bezogen auf die Kautschukphase, inkorporiert wird.

10. Schlagzähes thermoplastisches Polymergemisch auf der Basis eines thermoplastischen Polymers und eines Kautschuks in Gegenwart einer Verbindung, welche befähigt ist, als Promotor für die Haftung des Kautschuks am thermoplastischen Polymer zu wirken, dadurch gekennzeichnet, daß das Polymergemisch im wesentlichen aus:

50 bis 95 Gew.-Teilen einer Matrixphase aus einem gegen Bestrahlung beständigen thermoplastischen Polymer;

50 bis 5 Gew.-Teilen einer wenigstens teilweise vernetzten teilchenförmigen Kautschukphase mit einer durchschnittlichen Teilchengröße zwischen etwa 0,1 und 1,0 µm, ausgewählt aus der Gruppe umfassend Polybutadien, ein Butadien-Acrylnitrilcopolymer, ein Butadien-Styrolcopolymer, einen Acrylatkautschuk, einen Butylkautschuk, ein ein Ethylen-Vinylacetatcopolymer, ein Ethylen-Propylencopolymer, ein chloriertes Polyethylen, ein Ethylen-Propylencopolymer, in welches andere polyfunktionelle Gruppen encopolymerisiert worden waren, und Gemische hiervon; und

0,5 bis 10 Gew.-Teilen einer aus Polymereinheiten bestehenden Haftpromotorverbindung, die in der Matrixphase und in der Kautschukphase löslich ist, besteht.

11. Polymergemisch nach Anspruch 10, dadurch gekennzeichnet, daß die Teilchen der Kautschukphase in der Matrix mit Hilfe der Haftpromotorverbindung verankert sind.

12. Polymergemisch nach Anspruch 10, dadurch gekennzeichnet, daß das gegen Bestrahlung beständige thermoplastische Polymer Polystyrol oder ein Copolymer von Styrol mit Acrylnitril oder mit Maleinsäureanhydrid ist.

13. Verfahren nach Anspruch 1, dadurch gekennzeichnet, daß das auf diese Weise erhaltene schlagzähe thermoplastische Polymergemisch weiters mit einem Polyphenylenoxid vermischt und zu einem schlagzähen Polymerprodukt verarbeitet wird.

14. Schlagzähe Polymermasse, dadurch gekennzeichnet, daß sie aus

(a) 10 bis 90 Gew.-Teilen des schlagzähen thermoplastischen Polymergemisches nach Anspruch 10; und

(b) 90 bis 10 Gew.-Teilen eines Polyphenylenoxids besteht.

15. Geformter Gegenstand, hergestellt zumindest teilweise aus einem schlagzähen thermoplastischen Polymergemisch nach Anspruch 10.

16. Geformter Gegenstand, hergestellt zumindest teilweise aus der schlagzähen thermoplastischen Polymermasse nach Anspruch 14.

## Revendications

1. Procédé de préparation de mélanges de polymères thermoplastiques résistant aux chocs possédant des propriétés améliorées après traitement, à partir d'un polymère thermoplastique et d'un caoutchouc en présence d'un composé ayant la capacité de renforcer l'adhérence du caoutchouc sur le polymère thermoplastique, caractérisé en ce que dans une zone de mélange, on prépare un mélange contenant 50 à

8

**0 146 172**

95 parties en poids d'une phase de matrice d'un polymère thermoplastique qui résiste à l'irradiation et 50 à 5 parties en poids d'une phase de particules de caoutchouc en dispersion dans le polymère thermoplastique en présence de 0,5 à 10 parties en poids d'un composé qui renforce l'adhérence des particules dans la matrice, on solidifie le mélange provenant de la zone de mélange et on soumet le mélange provenant de la zone de mélange à une irradiation avant ou après la solidification.

2. Procédé selon la revendication 1, caractérisé en ce que le polymère thermoplastique qui résiste à l'irradiation est le polystyrène ou un copolymère de styrène avec l'acrylonitrile ou l'anhydride maléique.

3. Procédé selon la revendication 1, caractérisé en ce qu'on soumet ledit mélange obtenu dans ladite zone de mélange à l'irradiation avant ladite solidification.

4. Procédé selon la revendication 1, caractérisé en ce qu'on convertit ledit mélange obtenu dans ladite zone de mélanges avant ladite irradiation en un granulé et on soumet le granulé ainsi obtenu à l'irradiation.

5. Procédé selon la revendication 1, caractérisé en ce que ledit mélange contient de 50 à 95 parties en poids d'une phase de matrice consistant essentiellement en polystyrène ou un copolymère de styrène avec l'acrylonitrile ou l'anhydride maléique; 50 à 5 parties en. poids d'une phase de caoutchouc particulaire ayant une granulométrie moyenne d'environ 0,1 à 1,0 μm choisie dans le groupe comprenant le polybutadiène, un copolymère butadiène/acrylonitrile, un copolymère butadiène/styrène, un caoutchouc acrylate, un caoutchouc butyle, un copolymère éthylène/acétate de vinyle, un copolymère éthylène/propylène, un polyéthylène chloré, un copolymère éthylène/propylène dans lequel d'autres monomères polyinsaturés ont été copolymérisés et des mélanges de ceux-ci; et 0,5 à 10 parties en poids d'un composé de renforcement d'adhérence consistant en motifs polymères, qui est soluble dans ladite phase de matrice et qui est soluble dans ladite phase de caoutchouc.

6. Procédé selon la revendication 5, caractérisé en ce que ledit composé de renforcement d'adhérence est choisi parmi un copolymère éthylène/styrène, un copolymère isobutène/styrène, un polymère greffé de styrène et d'un monomère éthylène/propylène poly-insaturé, un copolymère séquencé butadiène hydrogéné/styrène et un copolymère séquencé styrène hydrogéné/butadiène/styrène.

7. Procédé selon la revendication 1, dans lequel on effectue ladite irradiation par irradiation électronique.

8. Procédé selon la revendication 1, dans lequel on applique ladite irradiation à une dose comprise entre environ 0,1 et 20 Mrad.

9. Procédé selon la revendication 1, dans lequel on incorpore dans ledit mélange un composé insaturé polyfonctionnel qui se dissout au moins partiellement dans ladite phase caoutchouc et qui renforce l'efficacité de l'irradiation à raison d'environ 0,1 à 10% en poids qu'on calcule par rapport à ladite phase de caoutchouc.

10. Mélange d'un polymère thermoplastique résistant au choc à base d'un polymère thermoplastique et d'un caoutchouc en présence d'un composé capable de renforcer l'adhérence du caoutchouc au polymère thermoplastique, caractérisé en ce que ledit mélange polymère comprend essentiellement: 50 à 95 parties en poids d'une phase de matrice d'un polymère thermoplastique qui résiste à l'irradiation; 50 à 5 parties en poids d'une phase de caoutchouc particulaire, au moins partiellement réticulée, ayant une granulométrie moyenne comprise entre 0,1 et 1,0 μm, choisie parmi le polybutadiène, un copolymère butadiène/acrylonitrile, un copolymère butadiène/styrène, un caoutchouc acrylate, un caoutchouc butyle, un copolymère éthylène/acétate de vinyle, un copolymère éthylène/propylène, un polyéthylène chloré, un copolymère éthylène/propylène dans lequel sont copolymérisés d'autres monomères polyinsaturés et des mélanges de ceux-ci; et 0,5 à 10 parties en poids d'un composé de renforcement d'adhérence constitué de motifs polymères et qui est soluble dans ladite phase de matrice et est soluble dans ladite phase de caoutchouc.

11. Mélange de polymère selon la revendication 10, caractérisé en ce que lesdites particules de al phase caoutchouc sont fixées dans la phase de matrice à l'aide dudit composé de renforcsment d'adhérence.

12. Mélange de polymère selon la revendication 10, caractérisé en ce que ledit polymère thermoplastique qui résiste à l'irradiation est le polystyrène ou un copolymère de styrène avec l'acrylonitrile ou l'anhydride maléique.

13. Procédé selon la revendication 1, caractérisé en ce qu'on mélange ledit mélange de polymère thermoplastique résistant au choc ainsi obtenu avec un oxyde de polyphénylène et on traite pour obtenir un polymère résistant au choc.

14. Composition de polymère résistant au choc, caractérisée en ce qu'elle comprend (a) de 10 à 90 parties en poids dudit mélange de polymère thermoplastique résistant au choc selon la revendication 10 et (b) 90 à 10 parties en poids d'un oxyde de polyphénylène.

15. Articles façonnés fabriqués au moins partiellement à partir du mélange de polymère thermoplastique résistant au choc selon la revendication 10.

16. Articles façonnés fabriqués au moins partiellement à partir de la composition polymère thermoplastique résistant au choc selon la revendication 14.

9

1        $10^4 \times$

2        $10^4 \times$

3        $10^4 \times$

4        $10^4 \times$